(19) Europäisches Patentamt
European Patent Office
Office européen des brevets

(11) **EP 4 645 786 A1**

(12) **EUROPEAN PATENT APPLICATION**

(43) Date of publication:
**05.11.2025 Bulletin 2025/45**

(21) Application number: **25173977.7**

(22) Date of filing: **02.05.2025**

(51) International Patent Classification (IPC):
**H04L 27/26** (2006.01)    **H04L 27/02** (2006.01)

(52) Cooperative Patent Classification (CPC):
**H04L 27/2607; H04L 27/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **03.05.2024 US 202463642125 P**
**30.04.2025 US 202519195289**

(71) Applicant: **Samsung Electronics Co., Ltd.**
**Suwon-si, Gyeonggi-do 16677 (KR)**

(72) Inventors:
• **ZHOU, Yuhan**
  **San Jose, CA, 95134 (US)**
• **FOUAD, Yaser Mohamed Mostafa Kamal**
  **San Jose, CA, 95134 (US)**
• **HOSSEINIAN, Seyed Mohsen**
  **San Jose, CA, 95134 (US)**
• **SARTORI, Philippe Jean Marc Michel**
  **San Jose, CA, 95134 (US)**

(74) Representative: **Kuhnen & Wacker**
**Patent- und Rechtsanwaltsbüro PartG mbB**
**Prinz-Ludwig-Straße 40A**
**85354 Freising (DE)**

(54) **SYSTEM AND METHOD FOR CYCLIC PREFIX HANDLING FOR OFDM BASED OOK WAVEFORM**

(57)    A system and a method are disclosed for transmitting data in a wireless communication network. The method includes transmitting, by a network node, a bit stream comprising ambient Internet of things, A-IoT, data; generating an on-off keying, OOK, OOK-1 or OOK-4 modulated waveform; generating a cyclic prefix, CP, by duplicating one or more samples of a first OOK chip in the waveform; appending the CP at the beginning of the first OOK chip in the waveform; and transmitting the waveform with the appended CP over a wireless channel to one or more A-IoT devices.

FIG. 13

EP 4 645 786 A1

**Description**

**TECHNICAL FIELD**

The disclosure generally relates to wireless communication systems. More particularly, the subject matter disclosed herein relates to improvements to cyclic prefix (CP) handling techniques for orthogonal frequency division multiplexing (OFDM)-based on-off keying (OOK) waveforms in ultra-low power device communications such as ambient Internet of things (A-IoT) systems.

**SUMMARY**

Wireless communication systems increasingly support ultra-low power devices (e.g., user equipments (UEs)), such as those used in A-IoT applications. In these systems, OOK waveforms based on OFDM have been used as a downlink transmission solution due to their compatibility with simple envelope detection at the receiver. To support these waveforms, a CP is inserted at the transmitter to mitigate inter-symbol interference (ISI) and facilitate synchronization.

OFDM-based systems may generate the CP by copying the last portion of the time-domain OFDM symbol and appending it to the beginning of the symbol. While effective for fast Fourier transform (FFT)-based OFDM receivers, this approach can introduce unintended rising or falling edges in the signal envelope when used with OOK waveforms. These false transitions can degrade envelope detection performance in low-complexity A-IoT devices, particularly under conditions of large sampling frequency offset (SFO).

One issue with the above approach is that the CP, when formed by duplicating the end of an OFDM symbol, can create unwanted transitions at the boundary between symbols. These transitions mimic valid signal activity and may be incorrectly interpreted as data by an envelope detector.

To overcome these issues, systems and methods are described herein for generating a CP in OFDM-based OOK waveforms by duplicating samples from the beginning, rather than the end, of the first OOK chip in an OFDM symbol. This CP is inserted before to the OFDM symbol to avoid introducing artificial edges at symbol boundaries.

In addition, the systems and methods described herein include adjusting the duration of the first OOK chip to ensure uniform length among all OOK chips within an OFDM symbol, thereby preserving chip-level timing alignment.

The above approaches improve on previous methods because they mitigate the generation of false signal transitions that compromise envelope detection accuracy. By tailoring CP insertion to the characteristics of OOK waveforms and the constraints of low-power A-IoT receivers, the disclosed techniques enhance signal integrity while minimizing receiver complexity and sensitivity to synchronization errors.

According to an embodiment, a method for transmitting data in a wireless communication network is provided. The method includes transmitting, by a network node, a bit stream comprising A-IoT data; generating an OOK-1 or OOK-4 modulated waveform; generating a CP by duplicating one or more samples of a first OOK chip in the waveform; appending the CP at the beginning of the first OOK chip in the waveform; and transmitting the waveform with the appended CP over a wireless channel to one or more A-IoT devices.

According to another embodiment, a system for transmitting data in a wireless communication network is provided. The system includes a process configured to receive a bit stream comprising A-IoT data; generate an OOK-1 or OOK-4 modulated waveform; generate a CP by duplicating one or more samples of a first OOK chip in the waveform; append the CP at the beginning of the first OOK chip in the waveform; and add a radio frequency (RF) front end configured to transmit the waveform with the appended CP to one or more A-IoT devices.

According to another embodiment, a non-transitory computer-readable medium storing instructions is provided. The instructions, when executed by a processor, cause the processor to receive a bit stream comprising ambient Internet of things (A-IoT) data; generate an OOK-1 or OOK-4 modulated waveform; generate a CP by duplicating one or more samples of a first OOK chip in the waveform; append the CP at the beginning of the first OOK chip in the waveform; and cause transmission of the waveform with the appended CP over a wireless channel to one or more A-IoT devices.

**BRIEF DESCRIPTION OF THE DRAWING**

In the following section, the aspects of the subject matter disclosed herein will be described with reference to exemplary embodiments illustrated in the figures, in which:

FIG. 1 illustrates a transmitting device or a receiving device in a communication system, according to an embodiment;
FIG. 2 illustrates an architecture of a CP-OFDM transmitter, according to an embodiment;
FIG. 3 illustrates an architecture of a CP-OFDM receiver, according to an embodiment;
FIG. 4 illustrates CP insertion in an OFDM symbol, according to an embodiment;
FIG. 5 illustrates an architecture for generating an OFDM-based OOK-1 waveform, according to an embodiment;

FIG. 6 illustrates an architecture for generating an OFDM-based OOK-4 waveform, according to an embodiment;

FIG. 7 illustrates an example architecture of an ultra-low power A-IoT device of a first category of devices, according to an embodiment;

FIG. 8 illustrates an example architecture of an ultra-low power A-IoT device with an RF-ED receiver of a second category of devices, according to an embodiment;

FIG. 9 illustrates an example architecture of an ultra-low power A-IoT device with an RF-ED receiver of a second category of devices, according to an embodiment;

FIG. 10 illustrates the effect of inserting a CP into an OFDM symbol carrying multiple OOK chips, according to an embodiment;

FIG. 11 illustrates the effect of CP insertion on an OOK signal waveform, according to an embodiment;

FIG. 12 is a block diagram of a signal generation architecture at a reader configured to support both cellular and A-IoT transmission paths, according to an embodiment;

FIG. 13 is a flowchart illustrating a method for CP handling and waveform generation for OFDM-based OOK transmission, according to an embodiment;

FIG. 14 is a block diagram of an electronic device in a network environment, according to an embodiment; and

FIG. 15 is a system including a UE and a base station gNB, in communication with each other, according to an embodiment.

## DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. **In** contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts or modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

"Bit stream" as used herein refers to a sequence of binary values (e.g., 0s and 1s) representing encoded information to be transmitted using a communication waveform. The bit stream may be mapped to one or more symbols in a time domain waveform (e.g., OOK chips) that are then modulated onto one or more subcarriers in a multi-carrier modulation scheme, such as OFDM.

"OOK chips" as used herein refers to time-domain waveform segments that represent binary data using the presence or absence of a carrier signal. For example, an "ON" state may represent a binary "1" and is implemented by transmitting energy on designated subcarriers, whereas an "OFF" state may represent a binary "0" and is implemented by transmitting no energy (e.g., zero signal amplitude). In some embodiments, a single OOK chip may occupy an entire OFDM symbol duration (OOK-1), while in others, multiple OOK chips may occupy a single OFDM symbol (OOK-M), where $M \geq 2$.

"CP" as used herein refers to a segment of time-domain samples that is appended to the beginning of an OFDM symbol to extend its duration. The CP is typically generated by copying a portion of samples from the OFDM symbol, and it serves to mitigate ISI caused by multipath propagation. In the context of OFDM-based OOK waveforms, the CP may be generated differently (e.g., using samples from the beginning of the OOK chip) to avoid introducing false rising or falling edges that degrade envelope detection performance in ambient A-IoT receivers.

"Samples from a first OOK chip within the OFDM symbol" as used herein refers to a subset of time-domain samples corresponding to the beginning portion of the first OOK chip embedded within an OFDM symbol. These samples may be used to generate the CP by duplication and prepending to the OFDM symbol, thereby forming a waveform with continuous amplitude transitions and reduced false edge occurrences at symbol boundaries.

"OFDM symbol with the appended CP" as used herein refers to the complete time-domain signal corresponding to a single OFDM symbol that includes a CP segment followed by the main OFDM symbol body. The CP may be constructed in various ways, such as by duplicating a segment from the beginning or end of the OFDM symbol, depending on desired properties like minimizing envelope discontinuities in OOK-based signaling.

"A-IoT devices" as used herein refers to ultra-low-power wireless devices that form part of an A-IoT network. These devices are designed with minimal complexity and may operate with energy harvested from the environment. A-IoT devices typically include simplified receiver chains, such as envelope detectors without fast Fourier transform (FFT) processing, and are optimized for low-duty-cycle, low-data-rate communication using amplitude-shift keying schemes, such as OOK over OFDM waveforms.

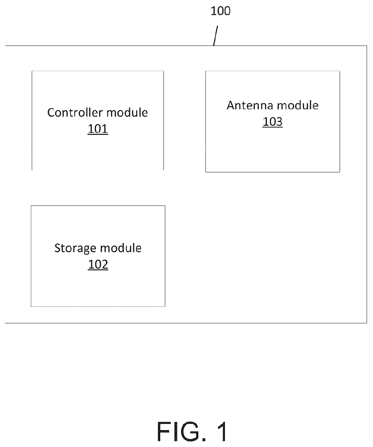

FIG. 1 illustrates a transmitting device or a receiving device in a communication system, according to an embodiment.

Referring to FIG. 1, the device 100 may function as a UE, such as a client device, or as a base station (gNB). The device 100 includes a controller module 101 (e.g., one or more processors), a storage module 102, and an antenna module 103, for generating and/or receiving OFDM-based OOK waveforms with CP handling as described herein.

The controller module 101 performs the primary processing tasks and manages device operations. It may include processors dedicated to specific tasks, such as digital signal processing (DSP), for handling signal conditioning, demodulation, synchronization, and envelope detection-based reception techniques suitable for ultra-low power ambient IoT devices. The DSP may employ advanced computational techniques, such as FFT, inverse FFT (IFFT), and digital filtering, to ensure the reliability and accuracy of signals processed for downlink transmission using OFDM-based OOK waveforms.

In some embodiments, the controller module 101 may also generate a CP by duplicating a portion of the first OOK chip in an OFDM symbol and appending it to the beginning of the OFDM symbol to reduce unwanted edge transitions.

The storage module 102 may include transitory or non-transitory memory for storing executable instructions, signal generation parameters, CP configuration data, and waveform construction logic for OOK transmission and detection. The instructions stored may include those necessary for executing procedures described herein, such as generating OOK-1 or OOK-4 symbols with adjusted CP placement to preserve uniform chip timing across OFDM symbols. The storage module 102 may further incorporate a communication protocol stack, including layers such as physical (PHY), medium access control (MAC), radio link control (RLC), and packet data convergence protocol (PDCP).

The antenna module 103 may include one or multiple antennas responsible for transmitting and receiving wireless signals between the device 100 and other network components such as UEs or gNBs. The antenna module 103 may receive wireless signals from base stations, convert these signals into electrical signals suitable for processing, and transmit data from the device to other nodes within the network, including performing low-complexity downlink reception using envelope detection.

Various embodiments disclosed herein provide systems and methods for CP insertion at a transmitting device for an OFDM-based OOK waveform. In particular, the CP may be generated by duplicating the first $N_{CP}$ samples of a first OOK chip within an OFDM symbol and inserting those samples at the beginning of the same OOK chip, where $N_{CP}$ represents the length of the CP.

The Internet of things (IoT) has become an increasingly prominent area of focus in wireless communication systems. A growing number of connected devices, or "things," are being deployed to enhance operational efficiency, enable automation, and improve the overall quality of life. To support the widespread adoption of IoT across a variety of industries and environments, there is a continued need to reduce the size, complexity, and power consumption of IoT devices. These reductions are expected to enable large-scale deployments involving tens or even hundreds of billions of devices.

For many use cases, reliance on batteries that require periodic replacement or manual recharging is impractical. Battery maintenance may result in high operational costs, environmental impact, and safety risks, particularly in scenarios such as remote sensors in critical infrastructure (e.g., electric power or petroleum systems). To address these concerns, devices with no energy storage or with limited, non-replaceable energy storage may instead rely on energy harvesting. However, energy harvesters typically produce only a few hundred microwatts ($\mu$W) or less, which is insufficient to support the milliwatt-level peak power consumption of conventional cellular devices.

Due to the limitations of existing technologies, new IoT system designs are being developed to meet the demands of emerging use cases. These new systems are envisioned to operate with significantly reduced complexity and power requirements, supporting massive connection density while enabling low-cost, low-maintenance operation. For example, within the 3rd Generation Partnership Project (3GPP) framework, A-IoT communication configurations are being established that can operate with power consumption and system complexity several orders of magnitude lower than that of existing low power wide area (LPWA) technologies such as narrowband IoT (NB-IoT) and enhanced machine-type communications (eMTC).

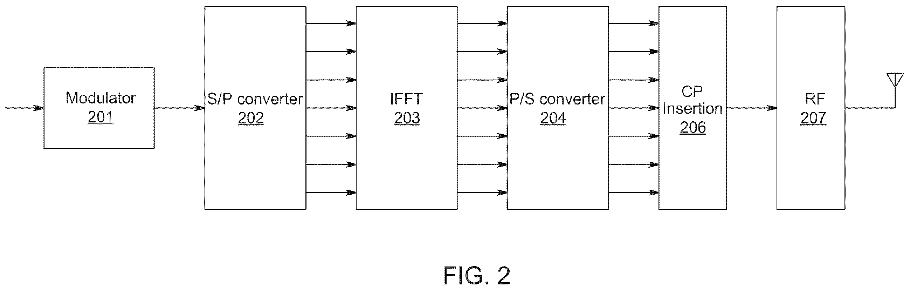

FIG. 2 illustrates an architecture of a CP-OFDM transmitter, according to an embodiment.

Referring to FIG. 2, the transmitter includes a modulator 201, a serial-to-parallel (S/P) converter 202, an IFFT block 203, a parallel-to-serial (P/S) converter 204, a CP insertion block 205, and an RF front-end 206. The modulator 201 generates modulated symbols for transmission, which are then converted into parallel streams by the S/P converter 202. The IFFT block 203 transforms the frequency-domain data into the time domain, producing time-domain OFDM symbols across multiple subcarriers.

The time-domain output from the IFFT block 203 is then serialized by the P/S converter 204. The serialized data is passed to the CP insertion block 205, which appends a CP to each OFDM symbol. In some OFDM systems, the CP is generated by copying the last portion of the IFFT output and placing it at the beginning of each OFDM symbol. This operation is used to mitigate ISI caused by multipath propagation and to preserve orthogonality between subcarriers during FFT-based demodulation at the receiver. The CP-augmented OFDM signal is passed to the RF front-end 206 for analog processing and transmission over the air.

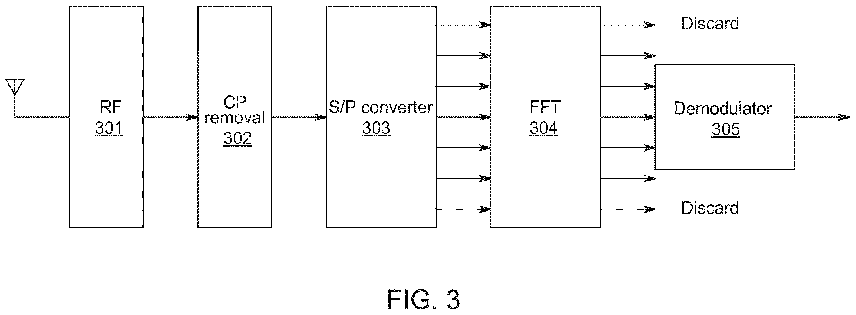

FIG. 3 illustrates an architecture of a CP-OFDM receiver, according to an embodiment.

Referring to FIG. 3, the receiver includes an RF front-end 301, a CP removal block 302, an S/P converter 303, an FFT block 304, and a demodulator 305.

The RF front-end 301 receives the analog OFDM signal over the air and performs down conversion and analog-to-digital conversion. The digitized signal is passed to the CP removal block 302, which discards the first $N_{CP}$ samples from each OFDM symbol, where $N_{CP}$ corresponds to the length of the CP. This removal ensures that only the ISI-free portion of the signal is retained for subsequent processing.

The resulting data is converted from serial to parallel format by the S/P converter 303 and then processed by the FFT block 304, which transforms the signal from the time domain to the frequency domain. After the FFT operation, redundant or unused subcarriers may be discarded, and the remaining frequency-domain symbols are demodulated by the demodulator 305 to recover the transmitted data.

In fifth generation (5G) new radio (NR) systems, a CP is inserted prior to each OFDM symbol in the time domain to improve robustness against multipath propagation.

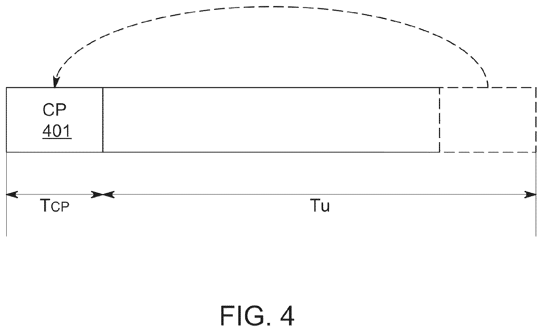

FIG. 4 illustrates CP insertion in an OFDM symbol, according to an embodiment.

Referring to FIG. 4, the CP 401 is generated by duplicating the last portion of the OFDM symbol, specifically, the last $N_{CP}$ samples, and appending them to the beginning of the symbol. This forms an extended time-domain signal composed of a CP interval $T_{CP}$ followed by the useful OFDM symbol interval Tu.

The insertion of the CP serves two functions. First, the CP acts as a guard interval that absorbs delayed versions of the transmitted signal, thereby preventing ISI at the receiver. To ensure ISI mitigation, the CP duration $T_{CP}$ is selected to be longer than the maximum expected delay spread of the channel impulse response. Second, by repeating a portion of the OFDM symbol, the CP converts the linear convolution of the transmitted signal with the channel into a circular convolution. This transformation allows the use of FFT-based demodulation techniques at the receiver, enabling the signal to be efficiently processed as a set of parallel frequency-flat subchannels.

In support of improving UE energy efficiency, low-power wake-up receivers (LP-WURs) and low-power wake-up signals (LP-WUSs) may be used by applying OOK-1 and OOK-4 waveform structures. These waveforms are based on OOK modulation and are designed to support low-complexity detection by energy-constrained UEs in A-IoT scenarios.

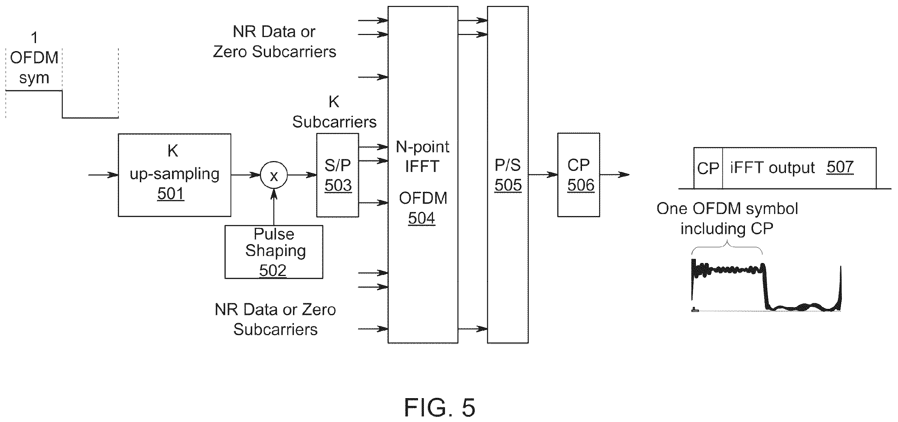

FIG. 5 illustrates an architecture for generating an OFDM-based OOK-1 waveform, according to an embodiment.

Referring to FIG. 5, the system includes a K-point up-sampling block 501, a pulse shaping block 502, an S/P converter 503, an IFFT block 504, a P/S converter 505, a CP insertion block 506, and an output buffer for the IFFT signal 507.

The OOK-1 waveform is designed to transmit a single bit per OFDM symbol using OKK modulation. In the case of an "ON" bit, all K designated subcarriers are modulated with energy; for an "OFF" bit, the subcarriers are left empty, corresponding to zero baseband power.

Referring to FIG. 5, to begin waveform generation, the bit stream is upsampled by the up-sampling block 501 and may be pulse-shaped using pulse shaping block 502 to manage parameters such as peak-to-average power ratio (PAPR) and dynamic range. The signal is then mapped onto the designated K subcarriers through S/P conversion via block 503.

The resulting frequency-domain signal is transformed into the time domain using the N-point IFFT block 504. The time-domain samples are then serialized by the P/S converter 505 and passed to the CP insertion block 506, which appends a CP to the beginning of the time-domain signal. The final output 507 includes a CP portion followed by the IFFT output, ready for RF transmission.

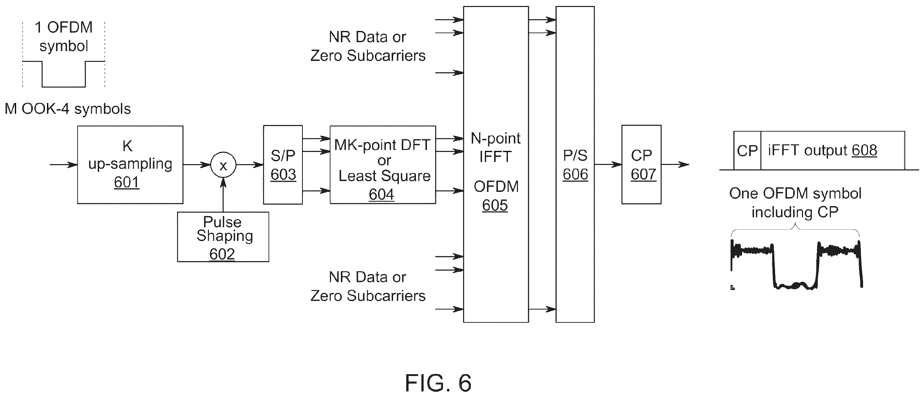

FIG. 6 illustrates an architecture for generating an OFDM-based OOK-4 waveform, according to an embodiment.

Referring to FIG. 6, the system includes a K-point up-sampling block 601, a pulse shaping block 602, an S/P converter 603, an MK-point discrete Fourier transform (DFT) or least-squares transform block 604, an IFFT block 605, a P/S converter 606, a CP insertion block 607, and an output buffer for the IFFT signal 608.

The OOK-4 waveform is a more sophisticated OOK structure compared to OOK-1. Instead of transmitting a single OOK bit per OFDM symbol, OOK-4 transmits multiple OOK chips within a single OFDM symbol interval. Specifically, the system transmits a sequence of "ON" or "OFF" states across the subcarriers assigned to OOK-4, enabling the encoding of multiple bits per OFDM symbol.

Referring to FIG. 6, the input sequence of M OOK chips is first upsampled by the K-point up-sampling block 601. To prepare the signal for frequency-domain mapping, optional pulse shaping may be applied using pulse shaping block 602, though the DFT stage itself may inherently provide sufficient spectral shaping. The signal is then serialized and converted to parallel streams by S/P converter 603.

Next, the MK-length signal is processed by the DFT or least-squares transform block 604 to map it onto the frequency domain. The DFT is typically used in practice due to its computational efficiency and similarity in output to least-squares estimation. The resulting frequency-domain signal is passed through the IFFT block 605 to obtain the corresponding time-domain representation.

The time-domain signal is serialized by P/S converter 606 and passed to CP insertion block 607, which appends a CP to the beginning of each OFDM symbol. The final output 608 includes the CP followed by the IFFT output, forming the complete baseband waveform suitable for RF transmission.

In certain embodiments, a receiver device configured for A-IoT communication may operate under stringent power constraints and simplified hardware architectures, while still supporting robust downlink detection of OOK waveforms. Depending on system implementation and use case requirements, A-IoT devices may be classified into categories based on their peak power consumption profiles and transmission capabilities.

A first category of devices may operate with an ultra-low peak power consumption on the order of approximately 1 microwatt. These devices may include minimal energy storage and exhibit initial SFO values up to several tens of parts per million. Such devices typically omit both downlink and uplink amplification circuitry, and may rely on passive mechanisms such as backscatter communication for uplink transmission. The uplink signal in such implementations may be reflected off an externally provided continuous wave (CW) carrier signal.

A second category of devices may operate with a moderately higher peak power budget, such as on the order of a few hundred microwatts. These devices may also include energy storage and support similar SFO tolerances. However, they are further equipped with downlink and/or uplink amplification capabilities. Depending on the design, the UL transmission may be implemented using either active radio transmission generated by the device itself or passive backscatter using an externally supplied CW carrier.

These architectural classifications help define the power envelope and complexity budget for various A-IoT receiver implementations. In all cases, the receiver architecture may include a low-complexity envelope detector configured to process OOK-modulated signals, such as OOK-1 or OOK-4 waveforms, transmitted using OFDM-based signaling formats. To ensure robust detection in the presence of SFO, multipath, and limited hardware resources, waveform design and CP insertion techniques may be adapted to the capabilities and constraints of these device types.

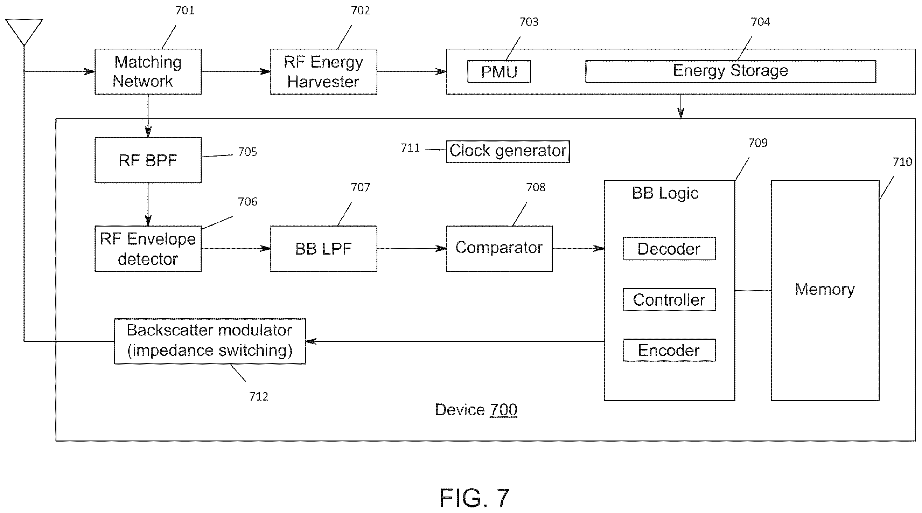

FIG. 7 illustrates an example architecture of an ultra-low power A-IoT device of a first category of devices, according to an embodiment.

A function of a device receiver includes envelope detection, which converts an RF or intermediate frequency (IF) signal to baseband based on passive components such as diode, resistor and capacitor. The envelope detector can achieve a relatively low power consumption. To support RF envelope detection at A-IoT devices, OOK is used for downlink transmission.

Referring to FIG. 7, the device 700 includes a matching network 701 coupled to an antenna, which is connected to an RF energy harvester 702. The energy harvester 702 supplies power to a power management unit (PMU) 703 and energy storage module 704 to enable self-sustaining operation. The RF receive path includes an RF bandpass filter (RF BPF) 705, an RF envelope detector 706, and a baseband low-pass filter (BB LPF) 707. The filtered signal is then processed by a comparator 708, which outputs to baseband (BB) logic 709. The BB logic 709 includes a decoder, controller, and encoder, and interfaces with a memory module 710.

A clock generator 711 provides timing signals for internal processing. For uplink transmission, the device includes a backscatter modulator 712 that performs impedance switching to modulate a carrier wave provided externally.

This receiver architecture is configured for OOK reception only and does not perform OFDM demodulation or FFT-based processing. As a result, the CP used in the downlink signal does not need to preserve the circular convolution property that is typically required to convert a linear convolution into a circular one for FFT-based demodulation. Instead, the CP may be adapted specifically for OOK envelope detection. Given that these devices may operate with significant SFOs, such as 10% or greater, it is particularly advantageous to construct the CP to avoid introducing unintended rising or falling edges in the time-domain signal, which could otherwise trigger false detections or degrade performance.

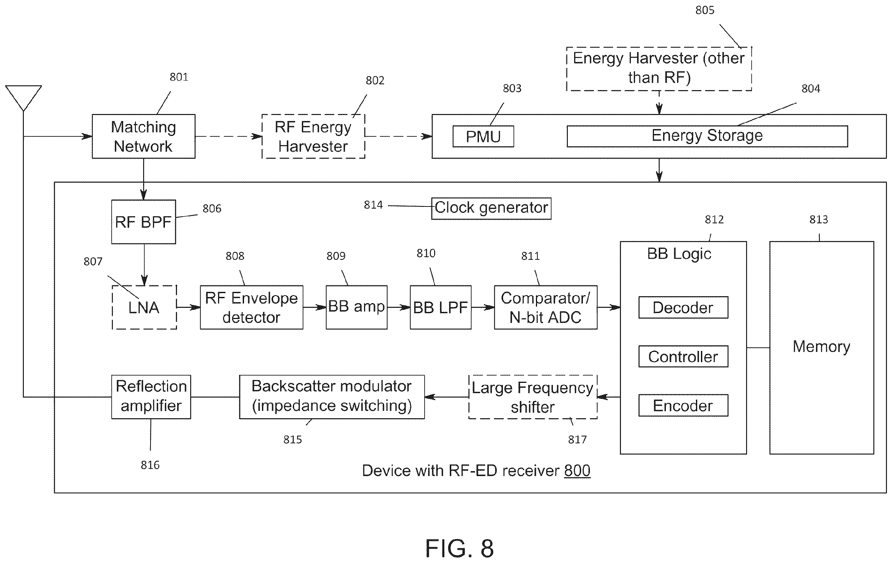

FIG. 8 illustrates an example architecture of an ultra-low power A-IoT device with an RF-ED receiver of a second category of devices, according to an embodiment.

Referring to FIG. 8, the device 800 includes a matching network 801 coupled to an antenna, an optional RF energy harvester 802, a PMU 803, and an energy storage module 804. In some embodiments, an additional energy harvester 805 not based on RF energy may supplement power to the energy storage.

The receiver chain includes an RF BPF 806, and optionally a low noise amplifier (LNA) 807. An RF envelope detector 808 extracts the signal envelope, which is then amplified by a baseband amplifier (BB amp) 809. The output is filtered through a BB LPF 810 and digitized via a comparator or an N-bit analog-to-digital converter (ADC) 811.

Digital baseband logic 812 includes a decoder, controller, and encoder, and interfaces with memory 813. A clock generator 814 provides timing signals for digital operation. For uplink signaling, the device includes a backscatter modulator 815, which performs impedance switching, and a reflection amplifier 816 to enhance backscattered signals. In some implementations, a large frequency shifter 817 is used to generate an uplink signal that is distinguishable from the downlink signal.

Compared to device 700, Device 800 includes additional amplification capabilities in both the downlink and uplink paths, enabling improved signal strength and flexibility. However, the device may still operate without full FFT-based OFDM demodulation. Like device 700, it may rely on envelope detection for receiving OOK waveforms, benefiting from waveform designs and CP structures that minimize spurious edges and maintain detection robustness in the presence of large SFOs.

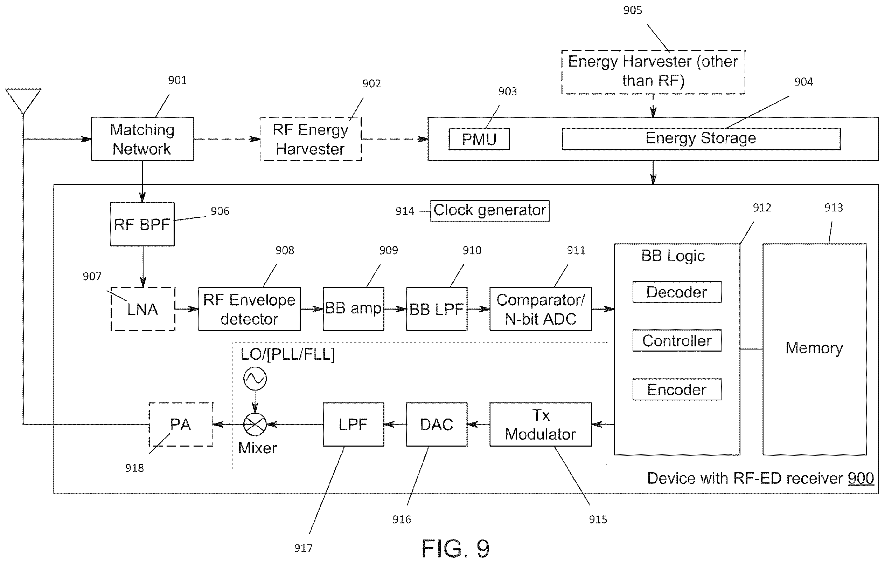

FIG. 9 illustrates an example architecture of an ultra-low power A-IoT device with an RF-ED receiver of a second category of devices, according to an embodiment.

Referring to FIG. 9, the device 900 includes a matching network 901 coupled to an antenna, an optional RF energy harvester 902, a PMU 903, and an energy storage module 904. In some embodiments, an additional energy harvester 905 not based on RF energy may supplement power to the energy storage.

The receiver chain includes an RF BPF 906, and optionally an LNA 907. An RF envelope detector 908 extracts the signal envelope, which is then amplified by a BB amp 909. The output is filtered through a BB LPF 910 and digitized via a comparator or an N-bit ADC 911.

Digital baseband logic 912 includes a decoder, controller, and encoder, and interfaces with memory 913. A clock generator 914 provides timing signals for digital operation. For uplink signaling, the device includes a full RF transmitter comprising a transmit modulator 915, a digital-to-analog converter (DAC) 916, an LPF 917, a mixer, and a local oscillator (LO) such as a PLL or FLL. A power amplifier (PA) 920 boosts the RF output signal prior to transmission.

This architecture differs from that of Device 800 in that it includes a fully integrated transmitter capable of generating and radiating an uplink signal independently, rather than relying on backscatter modulation. However, similar to Device 800, the receiver chain is based on envelope detection and does not perform FFT-based OFDM demodulation, making it compatible with OOK waveform reception techniques described herein.

The A-IoT receiver architectures described herein, including those of Device 700, Device 800, and Device 900, differ from a conventional CP-OFDM receiver architecture. In traditional systems, the received signal is amplified by an LNA, followed by CP removal and frequency-domain processing using an FFT. In contrast, the A-IoT receivers described in this disclosure omit CP removal and FFT altogether. Instead, the signal is passed directly to an envelope detector immediately following the LNA.

This design choice is enabled by the use of amplitude-shift keying (ASK) modulation in the form of OOK waveforms, such as OOK-1 and OOK-4. These waveforms, as shown in FIG. 5 and FIG. 6, produce time-domain signals that resemble traditional OOK signals with clearly distinguishable "on" and "off" states. As a result, the relevant information can be extracted using simple envelope detection techniques, without the need for frequency-domain processing or demodulation. This enables significant reductions in receiver complexity and power consumption, making the architecture well-suited for ultra-low power A-IoT deployments.

In various embodiments, downlink signaling from an A-IoT reader to a device (R2D) may be based on an OFDM-based waveform structure. The waveform may be designed to support ultra-low power receivers that utilize ASK detection methods, such as OOK. From the perspective of the downlink transmitter, the system may employ an OFDM-based waveform that supports modulation formats such as OOK-1, where a single OOK chip is transmitted per OFDM symbol, and OOK-4, where multiple OOK chips are transmitted per OFDM symbol.

The structure of the OFDM waveform may be transparent to the A-IoT receiver. For instance, the underlying OFDM signal may be generated using CP-OFDM, DFT-s-OFDM, or other OFDM variants, while the device detects the resulting signal envelope using non-coherent methods. Accordingly, the A-IoT device may remain agnostic to the specific waveform generation techniques used at the transmitter.

In connection with CP handling, different approaches may be considered for compatibility with envelope detection and simplified receiver design. One approach involves omitting CP removal at the receiver altogether and relying on the waveform design to avoid introducing discontinuities at symbol boundaries. Another approach seeks to ensure that the insertion of the CP does not result in false rising or falling edges at the transition between adjacent OOK chips, which could lead to incorrect detections. To address these concerns, the CP may be constructed such that the transition from the last chip of a given OFDM symbol to the first chip of the next symbol is smooth and uniform, for example, by aligning chip lengths or duplicating samples that avoid amplitude jumps.

Other considerations in the design and evaluation of R2D waveforms include the impact of the CP structure on timing acquisition and decoding performance, implementation complexity for both the reader and device, interference management when operating within licensed spectrum bands, and overall spectral efficiency. Multiple candidate CP handling strategies may be evaluated in light of these factors to identify approaches that optimize detection robustness while remaining compatible with the power and complexity constraints of A-IoT receivers.

Both OOK-1 and OOK-4 waveforms may be used for R2D transmission in A-IoT systems. For example, referring again to FIG. 5, the OOK-1 waveform transmits a single OOK chip per OFDM symbol. In this structure, a dedicated frequency-domain sequence is mapped to K subcarriers for the "ON" state, while zero is assigned to the same set of carriers for the "OFF" state. The mapped subcarriers are transformed into the time domain using an IFFT, followed by CP insertion to form the final baseband signal.

Or, in the case of FIG. 6, the OOK-4 waveform enables multiple OOK chips to be embedded within a single OFDM symbol. In this case, a sequence of M OOK chips is first upsampled and optionally shaped, then processed using a DFT or a least-squares optimization method to generate a frequency-domain signal. This signal may be optionally truncated or further adjusted across the K subcarriers. The resulting frequency-domain vector is passed through an IFFT, and a CP is then inserted at the beginning of the time-domain output to complete the waveform.

When generating an A-IoT downlink signal using an OOK-1 or OOK-4 waveform, CP-OFDM signal generation methods, based on the architecture shown in FIG. 5 and FIG. 6, can be used. The bitstream may be mapped to frequency-domain subcarriers, transformed via an IFFT, and appended with a CP generated by duplicating the last $N_{CP}$ samples of the IFFT output and inserting them at the beginning of the time-domain signal.

While this technique aligns with existing cellular transmission processes, it may result in unintended consequences when received by an A-IoT device configured for envelope detection, such as device 700, device 800, or device 900, illustrated in FIG. 7, FIG. 8, and FIG. 9, respectively. In particular, the addition of the CP can cause discontinuities, or sharp transitions, at the boundary between the CP and the start of the OFDM symbol. These transitions may appear as false rising or falling edges in the received envelope, potentially leading to unwanted chip detections.

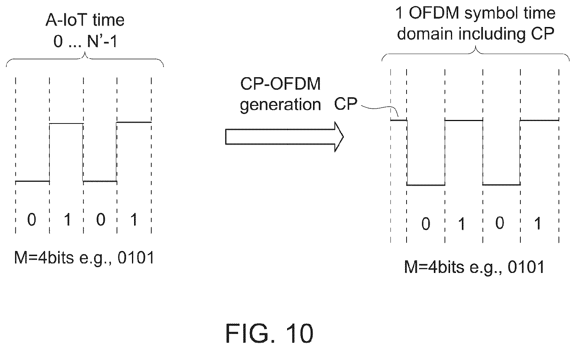

FIG. 10 illustrates the effect of inserting a CP into an OFDM symbol carrying multiple OOK chips, according to an embodiment.

Referring to FIG. 10, a time-domain signal comprising four OOK chips (e.g., a bit sequence "0101") is shown prior to CP insertion. Upon appending the CP, formed by copying the last portion of the symbol, a discontinuity is introduced at the junction between the CP and the start of the OFDM symbol. This creates an unintended rising edge that does not correspond to an actual data transition, and may trigger false detection events in receivers relying on envelope-based decision logic.

One possible mitigation strategy is to remove the CP at the receiver. However, this requires precise identification of CP boundaries within each symbol. Given that A-IoT devices often experience large SFOs, achieving sufficient timing accuracy for consistent CP removal is challenging. Imperfect synchronization may necessitate additional signal conditioning (e.g., filtering), which increases receiver complexity and power demands, both of which are constraints in low-power A-IoT design.

As such, alternate CP handling methods are desirable to preserve envelope signal integrity and avoid false detections in OFDM-based OOK transmissions.

As discussed above, the low complexity of A-IoT receivers may prevent them from accurately identifying and removing the CP at the start of each OFDM symbol. To reduce complexity and maintain energy efficiency, it may be preferable for the A-IoT device to treat the entire OFDM symbol, including the CP, as a continuous time-domain envelope for detection, rather than discarding the CP explicitly.

However, care must be taken to ensure that CP insertion does not introduce false rising or falling edges into the waveform, particularly between adjacent OOK chips. In OFDM-based OOK waveforms such as OOK-4 with M>1, where multiple chips are transmitted per symbol, the CP (which duplicates the end of the symbol) may inadvertently insert an unintended transition at the symbol boundary, degrading envelope detection accuracy.

The OFDM baseband signal is generated as a time-continuous baseband signal for OFDM symbol $l$, subcarrier spacing configuration $\mu$, and antenna port $p$, is shown in Equation 1:

$$s_l^{(p,\mu)}(t) = \begin{cases} \bar{s}_l^{(p,\mu)}(t) & t_{\text{start},l}^{\mu} \leq t < t_{\text{start},l}^{\mu} + T_{\text{symb},l}^{\mu} \\ 0 & \text{otherwise} \end{cases}$$

$$\dots \text{Equation 1}$$

where

$$\bar{s}_l^{(p,\mu)}(t) = \sum_{k=0}^{N_{\text{grid},x}^{\text{size},\mu} N_{\text{sc}}^{\text{RB}} - 1} a_{k,l}^{(p,\mu)} e^{j2\pi\left(k + k_0^{\mu} - N_{\text{grid},x}^{\text{size},\mu} N_{\text{sc}}^{\text{RB}}/2\right)\Delta f\left(t - N_{\text{CP},l}^{\mu} T_{\text{c}} - t_{\text{start},l}^{\mu}\right)}$$

$$\dots \text{Equation 2}$$

Here, the subcarrier spacing is:

$$\Delta f = 2^{\mu} * 15[\text{kHz}]$$

$$\dots \text{Equation 3}$$

The subcarrier shift term $k_0^{\mu}$ is defined as:

$$k_0^{\mu} = \left(N_{\text{grid},x}^{\text{start},\mu} + N_{\text{grid},x}^{\text{size},\mu}/2\right)N_{\text{sc}}^{\text{RB}} - \left(N_{\text{grid},x}^{\text{start},\mu_0} + N_{\text{grid},x}^{\text{size},\mu_0}/2\right)N_{\text{sc}}^{\text{RB}} 2^{\mu_0 - \mu}$$

$$\dots \text{Equation 4}$$

The total OFDM symbol duration, including the CP, is:

$$T_{\text{symb},l}^{\mu} = \left(N_{\text{u}}^{\mu} + N_{\text{CP},l}^{\mu}\right)T_{\text{c}}$$

$$\dots \text{Equation 5}$$

For Equations 1-5, $\mu$ is the subcarrier spacing configuration, $\mu_0$ is the largest subcarrier spacing index across all configurations, $N_{\text{u}}^{\mu}$ is the number of useful samples in the IFFT, $N_{\text{CP},l}^{\mu}$ is the number of CP samples for symbol $l$, and $T_{\text{c}}$ is the sampling period.

Accordingly, based on Equations 1-5, each OFDM symbol has a duration $T_{\text{symb},l}^{\mu}$ which contains a CP of length

$N_{\mathrm{CP},l}^{\mu} T_{\mathrm{c}}$. In 3GPP NR, the CP is obtained by copying the last $N_{\mathrm{CP},l}^{\mu}$ samples of the OFDM symbols into the beginning of the OFDM symbol to combat channel impairments. In other words, an OFDM symbol duration $T_{\mathrm{symb},l}^{\mu}$ consists of two segments (a CP which is a copy of the last $N_{\mathrm{CP},l}^{\mu}$ of the OFDM symbol followed by $N_{\mathrm{u}}^{\mu}$ samples).

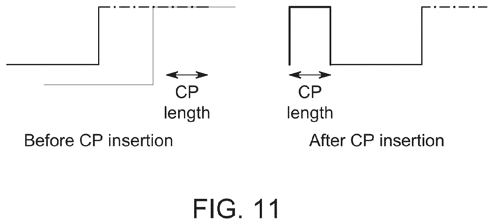

FIG. 11 illustrates the effect of CP insertion on an OOK signal waveform, according to an embodiment.

Referring to FIG. 11, a simple example is shown where an OFDM symbol carries two OOK chips (i.e., $M = 2$) representing a bit pattern of "0" followed by "1." Before CP insertion, the envelope exhibits a single rising edge at the midpoint. After CP insertion, however, the CP duplicates the trailing portion of the signal (which corresponds to a "1") and prepends it to the symbol. As a result, a false rising edge is introduced at the very beginning of the symbol, which may be misinterpreted by an envelope detector as a legitimate data transition.

From the perspective of an A-IoT device utilizing envelope detection, the presence of a CP may result in the detection of false transitions within an OFDM symbol. For example, even when a bit sequence of "0" followed by "1" is transmitted, the envelope detector may interpret the CP as an additional transition, leading to a detected sequence of "101" due to the false edge introduced at the beginning of the symbol. This misinterpretation degrades detection performance and increases the probability of false symbol decisions.

To address this issue and mitigate the impact of CP on A-IoT devices, the present disclosure provides systems and methods for handling CP in OFDM-based OOK waveforms.

According to an embodiment, a first system and method introduce a modified CP generation using the start of the OFDM symbol.

In some OFDM systems, the CP may be formed by copying the last $N_{\mathrm{CP},l}^{\mu}$ samples of the OFDM symbol and inserting them at the beginning, thereby preserving the circular convolution property for frequency-domain processing. However, in A-IoT systems employing envelope detection, this practice may be counterproductive, as it can introduce unintended transitions.

To eliminate the false edge introduced by CP insertion, the CP generation strategy at the transmitter may be modified. Instead of appending the last $N_{\mathrm{CP},l}^{\mu}$ samples of the OFDM symbol, this method generates the CP by copying the first $N_{\mathrm{CP},l}^{\mu}$ samples of the first OOK chip within the OFDM symbol. This CP structure preserves the signal's envelope continuity at the symbol boundary, thereby avoiding the introduction of artificial rising or falling edges between the last chip of OFDM symbol ($n$-1) and the first chip of OFDM symbol $n$. As a result, the envelope-detected signal becomes free of CP-induced artifacts, allowing the CP to be effectively ignored at the receiver without degrading detection performance.

Accordingly, for an antenna port $p$, subcarrier spacing configuration $\mu$, and OFDM symbol $l$ in a slot, the time-continuous signal $s_l^{(p,\mu)}(t)$ is given by:

$$s_l^{(p,\mu)}(t) = \begin{cases} \bar{s}_l^{(p,\mu)}(t) & t_{\mathrm{start},l}^{\mu} \leq t < t_{\mathrm{start},l}^{\mu} + N_{\mathrm{CP},l}^{\mu} T_{\mathrm{c}} \\ \bar{s}_l^{(p,\mu)}\left(t - N_{\mathrm{CP},l}^{\mu} T_{\mathrm{c}}\right) & t_{\mathrm{start},l}^{\mu} + N_{\mathrm{CP},l}^{\mu} T_{\mathrm{c}} \leq t < t_{\mathrm{start},l}^{\mu} + T_{\mathrm{symb},l}^{\mu} \end{cases}$$

$$\ldots \text{Equation 6}$$

In this formulation, Equations 2-5 remain applicable to Equation 6 and additionally correspond to the first system and method described herein, in which the CP is generated by duplicating the start of the OFDM symbol rather than the end.

According to an embodiment, a second system and method introduce symbol length adjustment for equal duration OOK chips.

The second system and method make use of a controlled adjustment to the symbol structure. In this approach, the total duration of the OOK chips within each OFDM symbol is carefully arranged so that all OOK chips, including the first symbol containing the CP, have equal effective length.

For example, consider the case of an OOK-4 waveform with M>1. If the CP preceding the first OOK chip has a length of $N_{\mathrm{CP},l}^{\mu}$ samples, then the first OOK chip may be shortened to $N_1$ samples, while each of the remaining OOK chips is lengthened to $N_2$ samples, such that:

$$N_{\text{CP},l}^{\mu} + N_1 = N_2$$

$$\ldots \text{Equation 7}$$

By ensuring that all OOK chips occupy the same total duration in the time domain, the receiver interprets the signal as uniformly spaced OOK chips, despite the presence of the CP at the beginning. This approach maintains signal symmetry and avoids the generation of false transitions due to abrupt changes in envelope shape. Although this method reduces the effective bit rate (due to fewer usable samples per OFDM symbol), it provides a robust and low-complexity solution for CP handling in envelope-detection-based A-IoT receivers.

In some deployments, A-IoT devices may operate in-band with conventional 5G NR cellular UEs. In such cases, a base station (e.g., a gNB) may act as the reader and be responsible for transmitting both customary NR signals and A-IoT signals simultaneously. To support this dual-functionality, the reader may be configured to perform two separate baseband signal generation processes, one for cellular NR data and one for A-IoT data, each involving independent IFFT operations and CP insertions.

For example, in a topology where the gNB directly communicates with both A-IoT receivers and NR UEs, the reader may generate the OFDM-based signal for the A-IoT devices in parallel with the signal for the NR UEs. Each signal may be processed independently using distinct modulation and waveform generation chains and then summed prior to RF transmission. This parallel generation and combination approach supports flexible waveform coexistence and minimizes interference between co-located services.

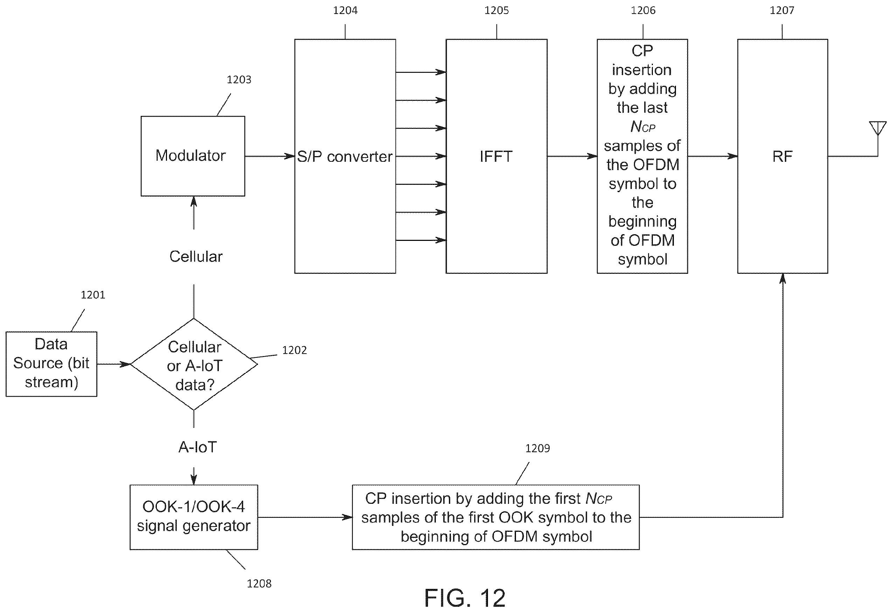

FIG. 12 is a block diagram of a signal generation architecture at a reader configured to support both cellular and A-IoT transmission paths, according to an embodiment.

Referring to FIG. 12, a data source 1201 provides a bitstream to a control logic unit 1202, which determines whether the input data corresponds to NR cellular traffic or A-IoT traffic. If the data is identified as cellular traffic, it is passed to a modulator 1203 and processed through an S/P converter 1204, followed by an IFFT block 1205. A CP insertion module 1206 generates a CP by duplicating the last $N_{CP}$ samples of the OFDM symbol and appending them at the beginning of the symbol. The resulting signal is then transmitted via the RF front end 1207.

Alternatively, if the data is designated for A-IoT transmission by control logic unit 1202, it is passed to an OOK-1/OOK-4 signal generator 1208. In accordance with one embodiment, a CP generator 1209 forms a CP by copying the first $N_{CP}$ samples of the first OOK chip within the OFDM symbol and appending them to the front of that symbol. This ensures the absence of spurious transitions in the envelope and enables compatibility with low-complexity, envelope-detecting A-IoT receivers. Optionally, the length of the OOK chips may also be configured such that the duration of the first OOK chip (including the CP) is equal to that of the remaining OOK chips, thereby preserving uniform symbol timing. The A-IoT signal is then merged with the NR signal at a summation point prior to transmission via the RF front end 1207.

According to another embodiment, rather than limiting the CP to a specific portion of the OOK chip (e.g., only the beginning or end), the CP may be formed from any selection of $N_{CP}$ samples within the first OOK chip in the OFDM symbol.

For example, in some implementations, the CP may be constructed by duplicating a segment from a middle area of the first OOK chip, or a region that exhibits minimal slope to suppress unwanted transient behavior at symbol boundaries.

In another embodiment, the CP may be omitted entirely in OFDM-based OOK transmissions. That is, no CP is inserted at the transmitter, and the OFDM symbol includes the IFFT output corresponding to the modulated OOK data. This approach may be beneficial in scenarios where the CP offers little or no performance advantage.

According to another embodiment, additional techniques may be applied to enhance robustness and reduce false edge detection in ASK modulated signals, such as OOK-1 or OOK-4, in A-IoT systems. Specifically, padding chips may be inserted at one or both ends of the OOK signal to reduce the likelihood of unintended transitions during CP insertion. For instance, padding chips may be appended after the last OOK chip in a symbol or inserted at both the beginning and end of the OOK chip sequence. These padding chips may serve to soften amplitude transitions between adjacent OFDM symbols, effectively mitigating the occurrence of false rising or falling edges at CP boundaries.

According to another embodiment, for OOK transmissions where M exceeds twelve OOK chips, a refined CP handling method may be selected to further mitigate envelope detection artifacts. In particular, an option can be adopted in which padding chips are inserted only at the end of the OOK chip sequence within the OFDM symbol, ensuring that the last two out of the M OOK chips at the end of each OFDM symbol are always in the "ON" state.

In another embodiment, the reader side signal generation for OOK-4 modulation based on a DFT-spread OFDM (DFT-s-OFDM) waveform may follow a structured process without requiring a specific implementation. First, an OFDM symbol may be defined to contain M OOK chips, where each chip corresponds to a discrete OOK symbol. Each OOK chip may be represented by L time-domain samples, such that a block of M*L samples forms the input to an N'-point DFT operation, where N' = M*L. The output of the N'-point DFT may then be mapped to X frequency domain subcarriers, where X corresponds to the bandwidth assigned for R2D transmission, and the relationship N' is greater than or equal to X is satisfied. Following this mapping, an N-point inverse discrete Fourier transform (IDFT) may be performed to generate the time-domain OFDM signal for transmission. Additionally, the generation process may include insertion of a CP after the IDFT operation, to form the final transmitted OFDM symbol. In certain implementations, normative specifications regarding at least the definition of the OFDM symbol structure and the IDFT operation may be required. Further timing details related to the CP insertion may also be reflected in the system design to ensure consistency with transmission requirements.

In another embodiment related to CP handling that does not preserve subcarrier orthogonality, the design of the OFDM symbol may be constrained such that its total duration, including the CP, accommodates an integer number of OOK chips. In this case, the CP is not derived by copying the end of the OFDM symbol. Instead, a CP of arbitrary or padded samples may be inserted to form a well-structured symbol without introducing disruptive transitions. For example, the system may be configured such that fourteen OFDM symbols, each comprising an integer number of OOK chips, fit within a slot duration. This approach aligns with timing structures typical in 3GPP systems.

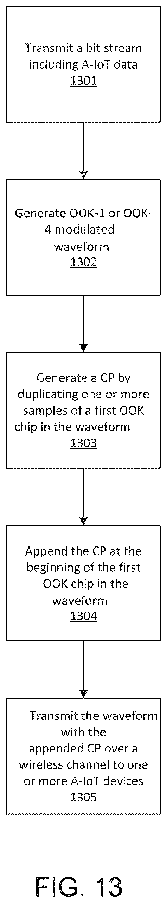

FIG. 13 is a flowchart illustrating a method for CP handling and waveform generation for OFDM-based OOK transmission, according to an embodiment.

Referring to FIG. 13, the method may be performed by any network device, such as a network node (for example, a base station or gNB), a terminal device, a satellite, or any other suitable transmitting entity capable of supporting A-IoT communications. The method begins at step 1301, where the network device transmits a bit stream comprising A-IoT data. The bit stream may represent various types of information, including application data, control signaling, or wake-up messages intended for low-power A-IoT devices. In some embodiments, the bit stream may be processed using techniques such as error correction coding, line coding, or scrambling to enhance robustness against wireless impairments.

At step 1302, the method includes generating a waveform (e.g., an OFDM symbol) that is modulated according to either OOK-1 or OOK-4 modulation schemes. At least part of the OOK-1 or OOK-4 generation may be in the frequency domain, and part of the generation may be in the time domain (e.g., a CP addition). In OOK-1 modulation, a single bit or chip is conveyed per OFDM symbol, whereas in OOK-4 modulation, multiple OOK chips are embedded within a single OFDM symbol, often through DFT-s-OFDM techniques. The selection between OOK-1 and OOK-4 may depend on system design considerations such as data throughput requirements, receiver complexity, and energy efficiency goals. In some examples, pulse shaping or spectral shaping operations may be optionally applied prior to the Fourier transform operations to manage the peak-to-average power ratio or control spectral occupancy.

At step 1303, the method includes generating a CP by duplicating one or more samples of a first OOK chip within the waveform (e.g., OFDM symbol). In contrast to some OFDM systems where the CP is generated from the last samples of an OFDM symbol, the present technique generates the CP from samples associated with the first OOK chip. In certain embodiments, the CP may be generated by duplicating the initial samples of the first OOK chip, although duplication from other portions of the first chip may also be used depending on the implementation. The number of duplicated samples may be selected based on considerations such as the expected maximum channel delay spread, the desired guard interval duration, or system-specific design optimizations.

At step 1304, the method includes appending the CP at the beginning of the first OOK chip in the waveform (e.g., OFDM symbol). Appending the CP in this manner helps prevent abrupt amplitude transitions between consecutive OFDM symbols, thereby improving the envelope detection reliability at the receiving A-IoT devices. In some embodiments, the timing of the first OOK chip may be adjusted relative to the CP length to maintain uniform symbol durations, or alternative padding techniques may be employed to ensure consistent transmission structure across multiple OFDM symbols.

At step 1305, the method includes transmitting the waveform (e.g., OFDM symbol), with the appended CP, over a wireless channel to one or more A-IoT devices. The wireless transmission may occur over a licensed or unlicensed spectrum band and may utilize low-power transmission schemes compatible with the energy constraints of A-IoT deployments. In various examples, the network device may transmit multiple OFDM symbols sequentially according to the described CP handling approach.

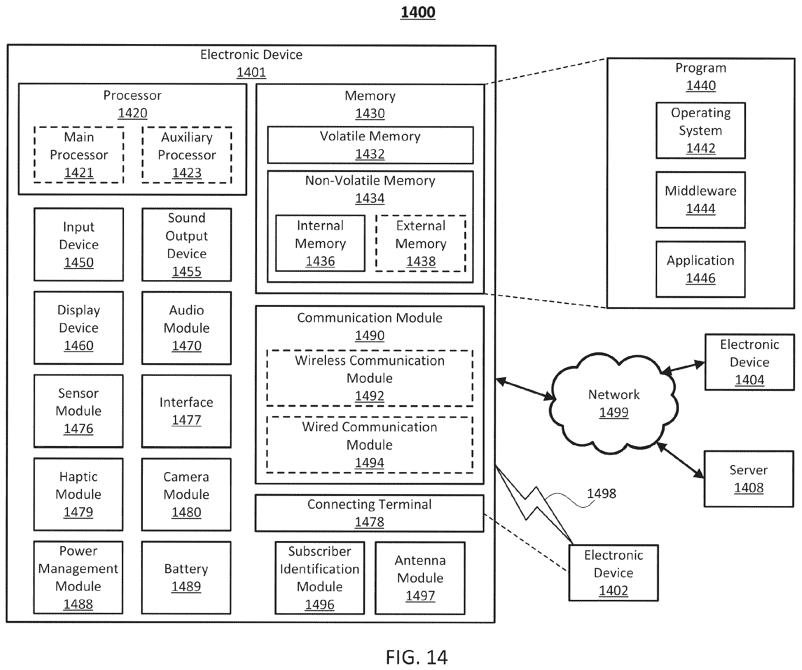

FIG. 14 is a block diagram of an electronic device in a network environment, according to an embodiment.

Referring to FIG. 14, an electronic device 1401 in a network environment 1400 may communicate with an electronic device 1402 via a first network 1498 (e.g., a short-range wireless communication network), or an electronic device 1404 or a server 1408 via a second network 1499 (e.g., a long-range wireless communication network). The electronic device 1401 may communicate with the electronic device 1404 via the server 1408. The electronic device 1401 may include a processor 1420, a memory 1430, an input device 1450, a sound output device 1455, a display device 1460, an audio module 1470, a sensor module 1476, an interface 1477, a haptic module 1479, a camera module 1480, a power management module 1488, a battery 1489, a communication module 1490, a subscriber identification module (SIM) card 1496, or an antenna module 1497. In one embodiment, at least one (e.g., the display device 1460 or the camera module 1480) of the components may be omitted from the electronic device 1401, or one or more other components may be added to the electronic device 1401. Some of the components may be implemented as a single integrated circuit (IC). For example, the sensor module 1476 (e.g., a fingerprint sensor, an iris sensor, or an illuminance sensor) may be embedded in the display device 1460 (e.g., a display).

The systems and methods described throughout this disclosure, including the CP handling techniques for OFDM-based OOK waveforms, may be implemented by or executed on one or more of the components of the electronic device 1401 shown in FIG. 14. In particular, the processor 1420 may be configured to execute instructions stored in memory 1430 to generate OOK-1 or OOK-4 waveforms, perform CP insertion using one or more of the proposed methods, and coordinate transmission of the resulting signal through the communication module 1490 and antenna module 1497. The communication module 1490 may include the RF front-end and baseband components necessary to implement the transmitter processing chains.

In embodiments where the electronic device 1401 functions as a reader (e.g., a gNB or other access point), the processor 1420 may be further configured to determine whether a bitstream corresponds to NR cellular or A-IoT traffic and route the data to the appropriate waveform generation path. The auxiliary processor 1423 may be used to offload signal processing tasks such as IFFT computation, OOK chip mapping, or CP insertion to improve power efficiency. Hardware acceleration components within the auxiliary processor 1423 or elsewhere in the device may also be used to support real-time waveform generation or envelope shaping logic.

These components, when programmed or configured as described herein, enable the device to support co-existence of A-IoT and NR signaling by flexibly managing CP generation and OFDM symbol construction, including methods such as duplicating the first samples of an OOK chip, balancing OOK chip durations, or omitting CP altogether. Accordingly, the structure shown in FIG. 14 provides a suitable hardware platform for implementing the disclosed R2D signal processing techniques.

The processor 1420 may execute software (e.g., a program 1440) to control at least one other component (e.g., a hardware or a software component) of the electronic device 1401 coupled with the processor 1420 and may perform various data processing or computations.

As at least part of the data processing or computations, the processor 1420 may load a command or data received from another component (e.g., the sensor module 1476 or the communication module 1490) in volatile memory 1432, process the command or the data stored in the volatile memory 1432, and store resulting data in non-volatile memory 1434. The processor 1420 may include a main processor 1421 (e.g., a central processing unit (CPU) or an application processor (AP)), and an auxiliary processor 1423 (e.g., a graphics processing unit (GPU), an image signal processor (ISP), a sensor hub processor, or a communication processor (CP)) that is operable independently from, or in conjunction with, the main processor 1421. Additionally or alternatively, the auxiliary processor 1423 may be adapted to consume less power than the main processor 1421, or execute a particular function. The auxiliary processor 1423 may be implemented as being separate from, or a part of, the main processor 1421.

The auxiliary processor 1423 may control at least some of the functions or states related to at least one component (e.g., the display device 1460, the sensor module 1476, or the communication module 1490) among the components of the electronic device 1401, instead of the main processor 1421 while the main processor 1421 is in an inactive (e.g., sleep) state, or together with the main processor 1421 while the main processor 1421 is in an active state (e.g., executing an application). The auxiliary processor 1423 (e.g., an image signal processor or a communication processor) may be implemented as part of another component (e.g., the camera module 1480 or the communication module 1490) functionally related to the auxiliary processor 1423.

The memory 1430 may store various data used by at least one component (e.g., the processor 1420 or the sensor module 1476) of the electronic device 1401. The various data may include, for example, software (e.g., the program 1440) and input data or output data for a command related thereto. The memory 1430 may include the volatile memory 1432 or the non-volatile memory 1434. Non-volatile memory 1434 may include internal memory 1436 and/or external memory 1438.

The program 1440 may be stored in the memory 1430 as software, and may include, for example, an operating system (OS) 1442, middleware 1444, or an application 1446.

The input device 1450 may receive a command or data to be used by another component (e.g., the processor 1420) of the electronic device 1401, from the outside (e.g., a user) of the electronic device 1401. The input device 1450 may include, for example, a microphone, a mouse, or a keyboard.

The sound output device 1455 may output sound signals to the outside of the electronic device 1401. The sound output device 1455 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 1460 may visually provide information to the outside (e.g., a user) of the electronic device 1401. The display device 1460 may include, for example, a display, a hologram device, or a projector and control circuitry to control a corresponding one of the display, hologram device, and projector. The display device 1460 may include touch circuitry adapted to detect a touch, or sensor circuitry (e.g., a pressure sensor) adapted to measure the intensity of force incurred by the touch.

The audio module 1470 may convert a sound into an electrical signal and vice versa. The audio module 1470 may obtain the sound via the input device 1450 or output the sound via the sound output device 1455 or a headphone of an external electronic device 1402 directly (e.g., wired) or wirelessly coupled with the electronic device 1401.

The sensor module 1476 may detect an operational state (e.g., power or temperature) of the electronic device 1401 or an environmental state (e.g., a state of a user) external to the electronic device 1401, and then generate an electrical signal or data value corresponding to the detected state. The sensor module 1476 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1477 may support one or more specified protocols to be used for the electronic device 1401 to be coupled with the external electronic device 1402 directly (e.g., wired) or wirelessly. The interface 1477 may include, for example, a high- definition multimedia interface (HDMI), a universal serial bus (USB) interface, a secure digital (SD) card interface, or an audio interface.

A connecting terminal 1478 may include a connector via which the electronic device 1401 may be physically connected with the external electronic device 1402. The connecting terminal 1478 may include, for example, an HDMI connector, a USB connector, an SD card connector, or an audio connector (e.g., a headphone connector).

The haptic module 1479 may convert an electrical signal into a mechanical stimulus (e.g., a vibration or a movement) or an electrical stimulus which may be recognized by a user via tactile sensation or kinesthetic sensation. The haptic module 1479 may include, for example, a motor, a piezoelectric element, or an electrical stimulator.

The camera module 1480 may capture a still image or moving images. The camera module 1480 may include one or more lenses, image sensors, image signal processors, or flashes. The power management module 1488 may manage power supplied to the electronic device 1401. The power management module 1488 may be implemented as at least part of, for example, a power management integrated circuit (PMIC).

The battery 1489 may supply power to at least one component of the electronic device 1401. The battery 1489 may include, for example, a primary cell which is not rechargeable, a secondary cell which is rechargeable, or a fuel cell.

The communication module 1490 may support establishing a direct (e.g., wired) communication channel or a wireless communication channel between the electronic device 1401 and the external electronic device (e.g., the electronic device 1402, the electronic device 1404, or the server 1408) and performing communication via the established communication channel. The communication module 1490 may include one or more communication processors that are operable independently from the processor 1420 (e.g., the AP) and supports a direct (e.g., wired) communication or a wireless communication. The communication module 1490 may include a wireless communication module 1492 (e.g., a cellular communication module, a short-range wireless communication module, or a global navigation satellite system (GNSS) communication module) or a wired communication module 1494 (e.g., a local area network (LAN) communication module or a power line communication (PLC) module). A corresponding one of these communication modules may communicate with the external electronic device via the first network 1498 (e.g., a short-range communication network, such as BLUETOOTH™, wireless-fidelity (Wi-Fi) direct, or a standard of the Infrared Data Association (IrDA)) or the second network 1499 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 1492 may identify and authenticate the electronic device 1401 in a communication network, such as the first network 1498 or the second network 1499, using subscriber information (e.g., international mobile subscriber identity (IMSI)) stored in the subscriber identification module 1496.

The antenna module 1497 may transmit or receive a signal or power to or from the outside (e.g., the external electronic device) of the electronic device 1401. The antenna module 1497 may include one or more antennas, and, therefrom, at least one antenna appropriate for a communication scheme used in the communication network, such as the first network 1498 or the second network 1499, may be selected, for example, by the communication module 1490 (e.g., the wireless communication module 1492). The signal or the power may then be transmitted or received between the communication module 1490 and the external electronic device via the selected at least one antenna.

Commands or data may be transmitted or received between the electronic device 1401 and the external electronic device 1404 via the server 1408 coupled with the second network 1499. Each of the electronic devices 1402 and 1404 may be a device of a same type as, or a different type, from the electronic device 1401. All or some of operations to be executed at the electronic device 1401 may be executed at one or more of the external electronic devices 1402, 1404, or 1408. For example, if the electronic device 1401 should perform a function or a service automatically, or in response to a request from a user or another device, the electronic device 1401, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 1401. The electronic device 1401 may provide the outcome, with or without further processing of the outcome, as at least part of a reply to the request. To that end, a cloud computing, distributed computing, or client-server computing technology may be used, for example.

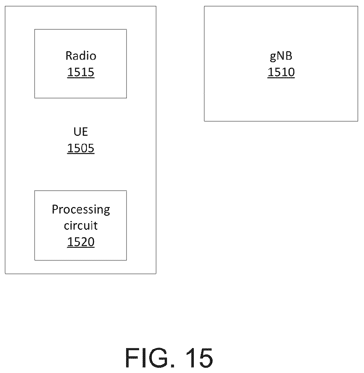

FIG. 15 is a system including a UE and a base station gNB, in communication with each other, according to an embodiment.

Referring to FIG. 15, the UE may include a radio 1515 and a processing circuit (or a means for processing) 1520, which may perform various methods disclosed herein. For example, the processing circuit 1520 may receive, via the radio 1515, transmissions from the a network node (gNB) 1510, and the processing circuit 1520 may transmit, via the radio 1515, signals to the gNB 1510.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Additionally or alternatively, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. **In** certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

## Claims

1. A method for transmitting data in a wireless communication network, the method comprising:

   transmitting, by a network node, a bit stream comprising ambient Internet of things, A-IoT, data;
   generating an on-off keying, OOK, OOK-1 or OOK-4 modulated waveform;
   generating a cyclic prefix, CP, by duplicating one or more samples of a first OOK chip in the waveform;
   appending the CP at the beginning of the first OOK chip in the waveform; and
   transmitting the waveform with the appended CP over a wireless channel to one or more A-IoT devices.

2. The method of claim 1, wherein the OOK-1 or OOK-4 modulated waveform is generated with a discrete Fourier transform-spread-OFDM, DFT-s-OFDM, waveform.

3. The method of claim 1 or 2, wherein the OOK-1 or OOK-4 waveform is multiplexed with a new radio, NR, signal in a frequency domain before appending the CP in a time domain.

4. The method of claim 3, wherein the CP is generated by duplicating an end portion of the waveform when the waveform includes the NR signal.

5. The method of any one of claims 1 to 3, wherein the CP is generated by duplicating the first $N_{c_p}$ samples of the first OOK chip in the waveform, where $N_{c_p}$ is a CP length which is configured by the network.

6. The method of any one of claims 1 to 3, wherein the CP is generated by duplicating any $N_{c_p}$ samples of the first OOK chip in the waveform, where $N_{c_p}$ is a CP length which is configured by the network.

7. The method of any one of claims 1 to 6, wherein the one or more samples of the first OOK chip in the waveform are duplicated multiple times to generate the CP if the length of the CP is greater than the length of the first OOK chip.

8. The method of any one of claims 1 to 7, further comprising generating a set of OOK chips such that a duration of the CP and the first OOK chip is equal to a duration of each remaining OOK chip without the CP in the waveform.

9. The method of any one of claims 1 to 8, wherein the waveform comprises M OOK chips, and a duration of the waveform including the CP is configured to be an integer multiple of a duration of the OOK chip.

10. The method of any one of claims 1 to 9, further comprising inserting one or more padding OOK chips at the end of the waveform.

11. The method of claim 10, wherein the padding OOK chips are inserted immediately after a last OOK chip in the waveform.

12. The method of any one of claims 1 to 11, wherein the transmitting comprises transmitting 14 orthogonal frequency division multiplexing, OFDM, symbols within a slot.

13. A system for transmitting data in a wireless communication network, comprising:
a processor configured to:

receive a bit stream comprising ambient Internet of things, A-IoT, data;
generate an on-off keying, OOK, OOK-1 or OOK-4 modulated waveform;
generate a cyclic prefix, CP, by duplicating one or more samples of a first OOK chip in the waveform;
append the CP at the beginning of the first OOK chip in the waveform; and
add a radio frequency, RF, front end configured to transmit the waveform with the appended CP to one or more A-IoT devices.

14. The system of claim 13, wherein the OOK-1 or OOK-4 modulated waveform is generated with discrete Fourier transform-spread-OFDM, DFT-s-OFDM, waveform.

15. The system of claim 13 or 14, wherein the processor is configured to multiplex the OOK-1 or OOK-4 OFDM modulated waveform with a new radio, NR, signal in a frequency domain before appending the CP in a time domain.

100

| Controller module 101 | Antenna module 103 |
| Storage module 102 | |

FIG. 1

FIG. 2

FIG. 3

FIG. 4

FIG. 5

FIG. 6

FIG. 7

FIG. 8

FIG. 9

A-IoT time
0 ... N'-1

CP-OFDM
generation   CP

1 OFDM symbol time
domain including CP

| 0 | 1 | 0 | 1 |

M=4bits e.g., 0101

| 0 | 1 | 0 | 1 |

M=4bits e.g., 0101

## FIG. 10

Before CP insertion          After CP insertion

FIG. 11

FIG. 12

Transmit a bit stream
including A-IoT data
1301

Generate OOK-1 or OOK-
4 modulated
waveform
1302

Generate a CP by
duplicating one or more
samples of a first OOK
chip in the waveform
1303

Append the CP at the
beginning of the first
OOK chip in the
waveform
1304

Transmit the waveform
with the
appended CP over a
wireless channel to one
or more A-IoT devices
1305

FIG. 13

**1400**

FIG. 14

EP 4 645 786 A1

Radio
1515

gNB
1510

UE
1505

Processing
circuit
1520

FIG. 15

**EP 4 645 786 A1**



# EUROPEAN SEARCH REPORT

Europäisches Patentamt
European Patent Office
Office européen des brevets

**Application Number**

EP 25 17 3977

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WENFENG ZHANG ET AL: "Discussion on general aspects of physical layer design of A-IoT communication", 3GPP DRAFT; R1-2402330; TYPE DISCUSSION; FS_AMBIENT_IOT_SOLUTIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. RAN WG1, no. Changsha, Hunan Province, CN; 20240415 - 20240419 5 April 2024 (2024-04-05), XP052586335, Retrieved from the Internet: URL:https://www.3gpp.org/ftp/TSG_RAN/WG1_R L1/TSGR1_116b/Docs/R1-2402330.zip R1-2402330 OPPO A-IoT general aspects of PHY layer design.docx [retrieved on 2024-04-05] * page 1 - page 5 * | 1-15 | INV. H04L27/26 H04L27/02 |

-----

TECHNICAL FIELDS SEARCHED (IPC)

H04L

The present search report has been drawn up for all claims

| Place of search | Date of completion of the search | Examiner |
|---|---|---|
| Berlin | 8 September 2025 | Feng, Mei |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)